# FASCICULE DE BREVET EUROPEEN

(11) **EP 3 781 795 B1**
(45) Date de publication et mention de la délivrance du brevet: **22.09.2021**
(21) Numéro de dépôt: 19717331.3
(22) Date de dépôt: 17.04.2019
(51) Int. Cl.: F01D 21/00, F01D 25/18, F01M 11/12, F16N 19/00

(54) **RÉSERVOIR D'HUILE DE TURBOMACHINE, PROCÉDÉ DE MESURE DE NIVEAU ET PROGRAMME D'ORDINATEUR**
ÖLVORRATSBEHÄLTER EINER TURBOMASCHINE, VERFAHREN ZUR MESSUNG DES ÖLSTANDS UND ZUGEHÖRIGES COMPUTERPROGRAMM
OIL RESERVOIR OF A TURBOMACHINE, PROCESS OF MEASURING THE OIL LEVEL AND COMPUTER PROGRAM

(30) Priorité: 19.04.2018 BE 201805258
(43) Date de publication de la demande: 24.02.2021
(73) Titulaire: Safran Aero Boosters SA, 4041 Herstal (BE)
(72) Inventeur: CORTEQUISSE, Jean-François, 4041 Herstal (BE)
(74) Mandataire: Lecomte & Partners
(86) Numéro de dépôt international: PCT/EP2019/059959
(87) Numéro de publication internationale: WO 2019/202013

(56) Documents cités:
- EP-A1- 3 282 104
- FR-A1- 3 036 792
- US-A1- 2015 362 350

## Description

### Domaine technique

L'invention se rapporte au domaine de l'estimation du niveau de liquide dans un réservoir de véhicule et/ou de turbomachine. L'invention a également trait à une turbomachine axiale, notamment un turboréacteur d'avion ou un turbopropulseur d'aéronef. L'invention a également pour objet un procédé de mesure de niveau de liquide dans un réservoir avec une paroi.

### Technique antérieure

La connaissance de la quantité d'huile contenue dans un réservoir de turboréacteur en vol permet d'anticiper certaines situations critiques. En effet, une détection de niveau anormalement bas indique une probabilité de panne future. Afin d'apporter une réponse précise quant à l'huile disponible, les réservoirs d'huile sont munis de dispositifs électriques permettant une lecture automatique du niveau d'huile disponible.

Le document EP 3 282 104 A1 divulgue un réservoir de turbomachine tel un turboréacteur double flux d'aéronef. Le réservoir permet de stocker un liquide de lubrification utile au fonctionnement de la turbomachine. Le réservoir présente : une chambre intérieure recueillant le liquide du réservoir ; une paroi avec une surface interne entourant la chambre intérieure ; et un dispositif capacitif de mesure de niveau du liquide. Le dispositif capacitif comprend au moins une électrode, éventuellement deux électrodes formant la surface interne et destinée(s) à être en contact électrique du liquide de sorte à en mesurer le niveau de manière capacitive. Or, la précision de mesure reste perfectible.

Le document FR 3 036 792 A1 décrit un autre exemple de réservoir d'huile.

### Résumé de l'invention

### Problème technique

L'invention a pour objectif de résoudre au moins un des problèmes posés par l'art antérieur. Plus précisément, l'invention a pour objectif d'améliorer la précision et la fiabilité de mesure de niveau d'un réservoir de liquide. L'invention a également pour objectif de proposer une solution simple, résistante, légère, économique, facile à produire, commode d'entretien, et d'inspection aisée.

### Solution technique

L'invention a pour objet un réservoir pour liquide, notamment de turbomachine tel un turboréacteur d'aéronef, le réservoir comprenant une cloison extérieure avec une surface interne et une surface externe ; une chambre intérieure destinée à contenir le liquide du réservoir et délimitée par la surface interne de la cloison extérieure ; un système de mesure de niveau de liquide ; remarquable en ce que le système de mesure comprend : une portion immergeable épousant la surface interne de la cloison ; un dégagement séparant la portion immergeable de la surface interne ; et un détecteur de liquide configuré pour émettre un signal vers la portion immergeable au travers du dégagement, ledit signal étant configuré pour être modifié en cas de présence de liquide dans le dégagement.

Selon des modes avantageux de l'invention, le réservoir peut comprendre une ou plusieurs des caractéristiques suivantes, prises isolément ou selon toutes les combinaisons techniques possibles :
- La portion immergeable comprend une face externe tournée vers la cloison et épousant généralement la surface interne, ladite face comprenant une surface avec des bosses s'étendant vers la cloison extérieure et des creux communiquant avec le dégagement.
- La profondeur des creux et la hauteur des bosses ; notamment mesurées selon l'épaisseur du dégagement ; sont supérieurs à la largeur des creux et à la largeur des bosses.
- Le dégagement comprend deux accès opposés communiquant avec la chambre intérieure.
- La portion immergeable comprend un corps avec une première branche en contact de la cloison extérieure, ledit corps formant la portion immergeable.
- La portion immergeable comporte des plots disposés selon un quadrillage et s'étendant vers la surface interne de la cloison externe.
- La cloison et la portion immergeable sont métalliques, et le dégagement forme un entrefer entre la portion de la surface interne.
- Le détecteur de liquide comprend une source acoustique et un microphone.
- Le signal est un signal sonore émis par la source acoustique au travers de la cloison extérieure vers la portion immergeable, et le microphone est apte à percevoir au travers de la cloison extérieure le signal sonore après réflexion contre la portion immergeable.
- Le détecteur de liquide comprend une source générant le signal et disposée à l'extérieur de la cloison extérieure, notamment contre la surface externe.
- Le détecteur de liquide comprend une source de tension électrique apte à appliquer une différence de potentiel électrique entre la cloison extérieure et la portion immergeable, le signal étant ladite différence de potentiel électrique.
- Le détecteur de liquide est de type capacitif, et configuré pour mesurer la capacité électrique du dégagement.
- La cloison extérieure comprend une poche dans laquelle le détecteur de liquide est agencé.
- Le détecteur de liquide est plaqué contre la surface externe de la cloison extérieure.
- La portion immergeable et la cloison externe sont venues de matière.
- Le détecteur de liquide, le dégagement, et la portion immergeable forment un premier module, le système de mesure du niveau comprenant en outre une pluralité de modules similaires ou identiques au premier module.
- Le dégagement traverse le système de mesure.
- La portion immergeable présente une zone rapprochée de la cloison et/ou avec des aspérités, le dégagement étant délimité par ladite zone rapprochée.
- La source acoustique et le microphone sont disposés à l'extérieur de la surface externe.
- La portion immergeable forme un peigne, ou présente un profil en peigne.
- Le détecteur de liquide est apte à coopérer avec la portion immergeable de liquide au travers du dégagement.
- Le dégagement communique hydrauliquement avec la chambre intérieure.
- La portion immergeable est disposée dans la chambre intérieure.
- La portion immergeable est destinée à baigner dans le liquide en fonction du niveau dudit liquide.
- L'épaisseur du dégagement est comprise entre : 3cm et 1mm, ou entre 2cm et 5mm, ou entre 1cm et 3mm.
- Les bosses et les creux forment une alternance.
- La portion immergeable comprend une face avec des vagues en contact du dégagement.
- Le dégagement comprend au moins un accès communiquant avec la chambre intérieure.
- Le corps comporte une deuxième branche en contact de la cloison extérieure.

L'invention a également pour objet une turbomachine, notamment un turboréacteur d'aéronef apte à fonctionner avec une accélération verticale négative, comprenant un réservoir de liquide, remarquable en ce que le réservoir de liquide est conforme à l'invention, préférentiellement le liquide est de l'huile.

L'invention a également pour objet un procédé, de mesure de niveau de liquide dans un réservoir, notamment un réservoir d'huile, le procédé comprenant les étapes suivantes : (a) remplissage du réservoir à l'aide du liquide ; (b) mesure du niveau de liquide dans le réservoir via le système de mesure du niveau ; remarquable en ce que le système comprend : une portion immergeable en regard de la surface interne de la cloison ; un dégagement séparant la portion immergeable de la surface interne ; et un détecteur de liquide ; et en ce que lors de l'étape (b) mesure, le détecteur de liquide génère un signal au travers du dégagement, respectivement du liquide en cas de présence dudit liquide dans le dégagement, le liquide étant apte à modifier le signal lorsque ledit signal traverse ledit dégagement ; le réservoir de liquide étant notamment conforme à l'invention.

Selon un mode avantageux de l'invention, la portion immergeable est réalisée par fabrication additive.

Selon un mode avantageux de l'invention, lors de l'étape (b) mesure, la température du liquide est supérieure à 100°C, ou supérieure ou égale à 200°C.

L'invention a également pour objet un programme d'ordinateur remarquable en ce qu'il comprend des instructions, qui, lorsque le programme est exécuté par un ordinateur, conduisent celui-ci à mettre en œuvre les étapes du procédé de mesure de niveau de liquide selon l'invention.

### Avantages apportés

Le mode de détection apporte une fiabilité améliorée pour la détection de liquide en un point donné. Par ailleurs, le temps de mesure peut être raccourci. Dans le contexte d'un véhicule tel un aéronef, une mesure peut être rapidement fournie après un changement d'accélération.

Grâce au présent système, les moyens informatiques permettant de traiter le signal peuvent être simplifiés ; notamment leur programme informatique. En effet, le calcul nécessaire au filtrage des erreurs de mesure est réduit puisque les cas de fausse détection restent limités.

En outre, l'invention offre des mesures ponctuelles plus fines. En effet, la taille de la portion immergeable peut former une cible de taille réduite, par exemple de moins de 5mm, si bien que la zone ; en l'occurrence le dégagement ; dans laquelle le liquide est détecté rétrécit.

### Brève description des dessins

La figure 1 représente une turbomachine axiale selon l'invention.
La figure 2 illustre un réservoir de liquide selon l'invention.
La figure 3 esquisse un système de mesure de niveau de liquide selon l'invention.
La figure 4 est un diagramme d'un procédé de mesure de niveau de liquide selon l'invention.

### Description des modes de réalisation

Dans la description qui va suivre, les termes « interne » et « externe » renvoient à un positionnement par rapport à l'axe de rotation d'une turbomachine axiale.

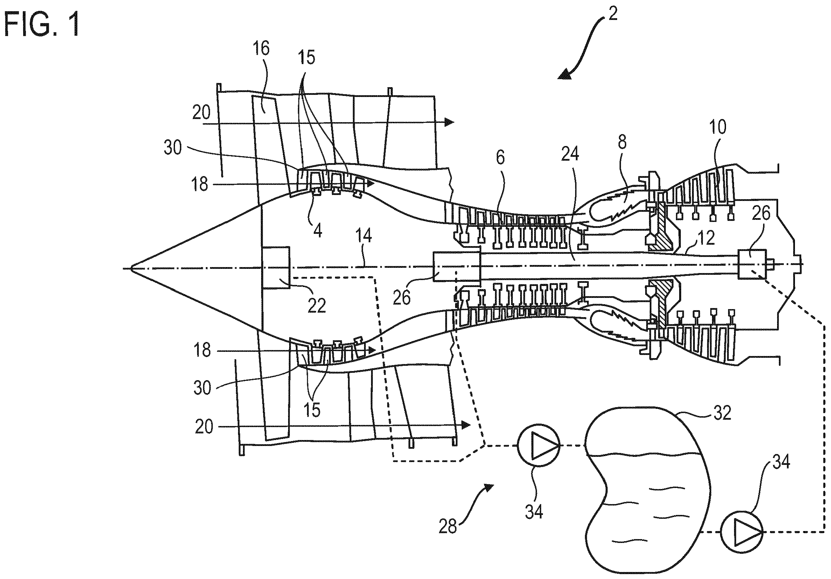

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique des turbines 10 transmise via des arbres jusqu'au rotor 12 met en mouvement les deux compresseurs 4 et 6. Ces derniers comportent plusieurs rangées d'aubes de rotor associées à des rangées d'aubes de stators 15. La rotation du rotor autour de son axe de rotation 14 permet ainsi de générer un débit d'air et de comprimer progressivement ce dernier jusqu'à l'entrée dans la chambre de combustion 8.

Un ventilateur d'arrivée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire. Le flux secondaire 20 peut être accéléré de sorte à générer une réaction de poussée utile au vol d'un avion. Des moyens de démultiplication, tel un réducteur épicycloïdal 22, peut réduire la vitesse de rotation de la soufflante 16 et/ou du compresseur basse-pression 4 par rapport au niveau de turbine 10 associé.

Les arbres 24 du rotor 12 permettent de relier mécaniquement chaque compresseur (4 ; 6) à un niveau de turbine dédié. En outre un arbre 24 peut être solidaire de la soufflante 16. Les arbres 24 sont articulés en rotation grâce à des paliers 26 supportés par le stator de la turbomachine 2. Des paliers 26 peuvent être insérés entre les arbres 24 emmanchés l'un dans l'autre.

Le refroidissement et/ou la lubrification des paliers 26 et de l'optionnel réducteur épicycloïdal 22 sont assurés par un circuit de liquide 28, tel un circuit de lubrification. Le liquide en question peut notamment être de l'huile. Le circuit de lubrification 28 peut également être impliqué dans le dégivrage de la turbomachine, notamment d'un bec de séparation annulaire 30 en entrée du compresseur basse-pression 4. Le circuit de lubrification 28 peut en outre alimenter des actionneurs tels des vérins (non représentés).

Le circuit de lubrification 28 peut être propre à la turbomachine 2. Il peut être autonome grâce à la présence d'un réservoir 32 dédié. Ainsi, le circuit peut fonctionner en circuit fermé. Des pompes 34 récupérant ou refoulant l'huile peuvent être du type volumétrique, par exemple pour maîtriser le débit. Le circuit d'huile 28 peut ainsi comprendre plusieurs lignes de récupération d'huile convergeant vers un réservoir 32. Le réservoir 32 est également le point de départ de plusieurs lignes d'alimentation des paliers 26 et des divers équipements.

Aussi, le fonctionnement de la turbomachine 2 entraîne une usure des paliers 26 et des pompes 34. Cette usure libère des particules métalliques dans le circuit de lubrification 28. Ces particules se retrouvent également dans l'huile du réservoir 32, et peuvent modifier les propriétés électriques de l'huile. Le réservoir pour liquide peut être un échangeur de chaleur.

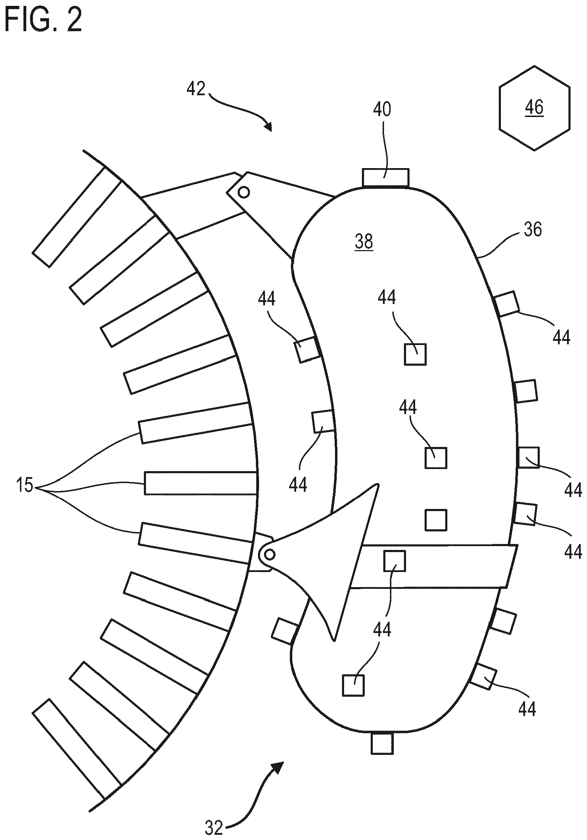

La figure 2 est une vue en coupe d'un réservoir 32 d'huile tel que celui de la figure 1.

Le réservoir 32 peut être fixé à la nacelle de la turbomachine 2, ou à un carter de compresseur. Afin d'augmenter son volume utile, le réservoir 32 est essentiellement allongé tout en suivant une forme générale courbe. Cette courbure permet une implantation entre deux cloisons courbes et rapprochées. Le réservoir 32 peut notamment être à proximité d'une source chaude, sa température peut atteindre 100°C ; en plus d'être exposé aux vibrations de la turbomachine. Le réservoir 32 peut être fixé au carter du compresseur supportant également des aubes de stator 15.

Le réservoir 32 forme un contenant essentiellement clos et étanche. Son volume interne, c'est-à-dire sa capacité de stockage, peut être supérieur ou égal à : 20L, ou 50L, ou 70L. Le réservoir 32 présente une cloison extérieure 36, telle une peau ou une coquille. La cloison extérieure 36 peut former la structure du réservoir 32, et assurer son étanchéité. Sa surface externe 38 est visible. Le sommet du réservoir 32 peut être identifié grâce à un bouchon 40, ou à un évent (non représenté).

Le réservoir 32 comporte un système de mesure 42 du niveau de liquide y étant stocké. Le système de mesure 42 comprend au moins un ou plusieurs modules de mesure 44. Les modules de mesure 44 peuvent être identiques ou similaires. Les modules de mesure 44 peuvent être répartis verticalement sur la hauteur du réservoir 32 ; et/ou répartis autour du réservoir 32.

Le système de mesure 42, via ses modules de mesure 44, permet d'estimer la quantité d'huile. Chaque module peut détecter une présence de liquide en un point donné contre la cloison extérieure 36. Une unité centrale 46, par exemple propre à la turbomachine ou à un aéronef, peut communiquer avec chaque module 44 afin de calculer le volume de liquide présent dans le réservoir 32. L'unité centrale 46 peut comprendre des moyens informatiques exécutant des instructions de code de programme informatique permettant d'effectuer un procédé de mesure du niveau d'huile sur la base des informations fournies par les modules 44. L'unité centrale 46 peut être configurée pour estimer le volume total de liquide contenu dans la cavité par triangulation à partir des mesures des modules 44. Par exemple, le mode de calcul par triangulation peut correspondre à celui divulgué dans la demande de brevet BE2017/5865 déposée le 29/11/2017, où les au moins trois capteurs ponctuels correspondent aux modules de mesure 44 évoqués ci-dessus.

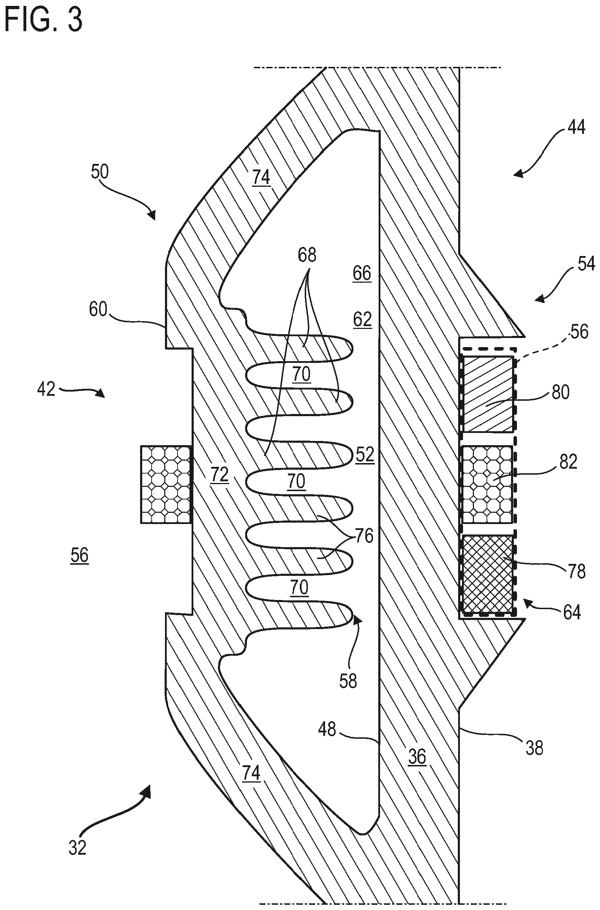

La figure 3 esquisse une partie d'un système de mesure 42 où un des modules de mesure 44 représentatif est apparent. Le système de mesure 42 peut correspondre à celui détaillé en figure 2. Une partie de cloison extérieure 36 du réservoir 32 est représentée. Sa surface externe 38 porte le module 44. Suivant l'épaisseur de la cloison 36, la surface interne 48 de la cloison 36 est à l'opposé de la surface externe 38.

De l'intérieur vers l'extérieur du réservoir 32, le module de mesure 44 peut présenter successivement une portion immergeable 50, un dégagement 52 et un détecteur de liquide 54. Ces différentes entités sont partagées, si bien que le module 44 est à cheval, et/ou traverse la cloison 36 selon son épaisseur.

La portion immergeable 50 peut être à l'intérieur du réservoir 32, notamment dans sa chambre intérieure 56 recevant le liquide. La portion immergeable 50 est apte à être en contact du liquide lorsqu'il atteint son niveau. Elle peut alors être noyée dans le liquide, si bien que toute sa surface est en contact du liquide.

La portion immergeable 50 peut présenter une face externe 58 tournée vers la cloison 36, et délimitant le dégagement 52 en combinaison de la surface interne 48. La face interne 60 de la portion immergeable 50 est tournée vers l'intérieur de la chambre intérieure 56, et est opposée à la face externe 58. La portion immergeable et la cloison externe peuvent être venues de matière. Elles peuvent être produites par fabrication additive.

Le dégagement 52 peut traverser le module 44. Il peut s'étendre sur la surface interne 48, et présenter une enveloppe complémentaire de la surface interne 48. Il peut former une lame de séparation entre la portion immergeable 50 et la cloison 36. Il peut matérialiser un entrefer. Le dégagement 52 peut déboucher des deux côtés afin de faciliter l'entrée et l'échappement du liquide lorsque le niveau baisse. Au moins un, ou deux accès 62 opposés permettent une circulation du liquide au travers du dégagement 52, afin de permettre un écoulement depuis et vers la chambre intérieure 56.

Le détecteur de liquide 54 est disposé à l'extérieur du réservoir 32, par exemple contre la surface extérieure 38 de la cloison 38. Cette dernière peut présenter une poche 64, ou une cavité, dans laquelle le détecteur de liquide 54 est disposé. Le détecteur de liquide 54 est configuré pour émettre un signal vers la portion immergeable au travers du dégagement. Ce signal présente la particularité d'être modifié en cas de présence de liquide dans le dégagement 52, ce qui prouve une présence de liquide au point formé par le dégagement 52. La modification peut avoir lieu lors d'une traversée du dégagement et/ou lors d'un renvoi par la portion immergeable 50.

La portion immergeable 50 peut présenter une zone rapprochée 66 de la cloison 36, également appelée zone à aspérités. Le dégagement 50 est délimité par ladite zone, il peut être délimité par la présence d'aspérités (68 ; 70). Ce dégagement 50 peut être un rétrécissement entre la cloison et la portion immergeable 50.

La face externe 58 peut porter les aspérités de la portion immergeable 50. Elle peut comprendre une surface avec des bosses 68 s'étendant vers la cloison extérieure 36 et le dégagement 52, ainsi que des creux 70 communiquant avec le dégagement 52 et s'enfonçant vers l'intérieur de la chambre 56. Par convention, il peut être définit que les creux sont séparés et distincts du dégagement. La profondeur des creux 70 et la hauteur des bosses 68 ; notamment mesurées selon l'épaisseur du dégagement 52 ; ou selon l'épaisseur de la cloison 36 au droit de la portion immergeable 50 ; ou perpendiculairement à la surface interne 48 ; sont plus grand que la largeur des creux et que la hauteur des creux.

La portion immergeable 50 peut comprendre un corps 72 avec deux branches 74 en contact de la cloison extérieure 36. Le corps 74 peut porter la zone rapprochée 66 et/ou la face externe 58. Les branches 74 peuvent maintenir le la zone rapprochée 66 à distance de la cloison, et donc préserver l'épaisseur du dégagement 52.

La portion immergeable 50 peut former une cible pour le détecteur de liquide 54. Elle peut présenter une forme à vagues, ou en peigne. Elle peut présenter une pluralité des plots 76 formant les bosses 68. Les plots peuvent être répartis sur l'étendue du dégagement 52. Ils peuvent être disposés selon un quadrillage (seule une rangée étant représentée).

Le détecteur de liquide 54 peut comprendre une source acoustique 78 et un microphone 80. La source acoustique 78 est apte à émettre un signal sonore, également appelé signal acoustique, au travers de la cloison extérieure 36. Le signal se propage au travers du dégagement 52 jusqu'à atteindre la portion immergeable 50 contre laquelle il se réfléchit, puis retourne vers le microphone 80 en effectuant le chemin inverse.

Lorsque le dégagement 52 est vide le signal est partiellement absorbé, et une part réduite ou nulle retourne vers le microphone 80. En cas de présence de liquide, la conduction acoustique au travers du dégagement 52 est améliorée, et l'amplitude du signal atteignant le microphone 80 augmente. Selon que les creux 70 restent vides ou rempli de liquide, la part de signal réfléchie varie ; que le dégagement soit vide ou non.

En complément ou en alternative, le détecteur de liquide 54 peut comprendre une source de tension électrique 82 apte à appliquer une différence de potentiel électrique entre la cloison extérieure 36 et la portion immergeable 50. Le signal peut alors être une tension électrique permettant de mesurer une capacité électrique au travers du dégagement. Le potentiel électrique peut évoluer en fonction de la présence de liquide à cet endroit.

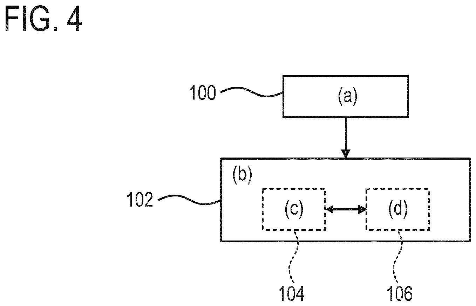

La figure 4 représente un diagramme du procédé de mesure de niveau de liquide dans un réservoir de liquide. Le réservoir de liquide peut être conforme à celui présenté en relation avec les figures 1 à 3, et le système de mesure peut être conforme à celui présenté en relation avec les figures 2 et 3.

Le procédé peut comprendre une des étapes suivantes, éventuellement réalisées dans l'ordre qui suit :
(a) remplissage 100 du réservoir à l'aide du liquide ;
(b) mesure 102 du niveau de liquide dans le réservoir via le système de mesure du niveau.

Entre les étapes (a) remplissage 100 et (b) mesure 102 un mécanisme branché hydrauliquement au réservoir peut utiliser le liquide, si bien que le réservoir est siphoné. Il est partiellement vidé ; d'où le besoin d'en contrôler le niveau. L'étape (b) mesure 102 peut comprendre une étape (c) génération 104 d'un signal et une étape (d) réception 106 du signal émis en étape (c) génération 104. L'étape (d) réception 106 comprend la lecture et l'analyse du signal, par exemple son intensité acoustique et/ou sa capacité électrique. L'analyse des fréquences reçues, autre que la fréquence ou le spectre de la source acoustique, renseigne sur le remplissage des creux.

## Revendications

1. Réservoir (32) pour liquide, notamment de turbomachine (2) tel un turboréacteur d'aéronef, le réservoir (32) comprenant une cloison extérieure (36) avec une surface interne (48) et une surface externe (38) ; une chambre intérieure (56) destinée à contenir le liquide du réservoir (32) et délimitée par la surface interne (48) de la cloison extérieure (36); un système de mesure (42) de niveau de liquide;
**caractérisé en ce que** le système de mesure (42) comprend :
- une portion immergeable (50) épousant la surface interne (48) de la cloison extérieure (36);
- un dégagement (52) séparant la portion immergeable (50) de la surface interne (48); et
- un détecteur (54) de liquide configuré pour émettre un signal vers la portion immergeable (50) au travers du dégagement (52), ledit signal étant configuré pour être modifié en cas de présence de liquide dans le dégagement (52).

2. Réservoir (32) selon la revendication 1, **caractérisé en ce que** la portion immergeable (50) comprend une face externe (58) tournée vers la cloison extérieure (36) et épousant généralement la surface interne (48), ladite face comprenant une surface avec des bosses (68) s'étendant vers la cloison extérieure (36) et des creux (70) communiquant avec le dégagement (52), et préférentiellement, la profondeur des creux (70) et la hauteur des bosses (68) ; notamment mesurées selon l'épaisseur du dégagement (52) ; sont supérieurs à la largeur des creux et à la largeur des bosses (68).

3. Réservoir (32) selon l'une des revendications 1 ou 2, **caractérisé en ce que** le dégagement (52) comprend deux accès (62) opposés communiquant avec la chambre intérieure (56).

4. Réservoir (32) selon l'une des revendications 1 à 3, **caractérisé en ce que** la portion immergeable (50) comprend un corps (72) avec une première branche (74) en contact de la cloison extérieure (36), ledit corps (72) formant la portion immergeable (50).

5. Réservoir (32) selon l'une des revendications 1 à 4, **caractérisé en ce que** la portion immergeable (50) comporte des plots (76) disposés selon un quadrillage et s'étendant vers la surface interne (48) de la cloison extérieure (36).

6. Réservoir (32) selon l'une des revendications 1 à 5, **caractérisé en ce que** la cloison (36) et la portion immergeable (50) sont métalliques, et le dégagement (52) forme un entrefer entre la portion de la surface interne (48).

7. Réservoir (32) selon l'une des revendications 1 à 6, **caractérisé en ce que** le détecteur (54) de liquide comprend une source acoustique (78) et un microphone (80) et préférentiellement le signal est un signal sonore émis par la source acoustique (78) au travers de la cloison extérieure (36) vers la portion immergeable (50), et le microphone (80) est apte à percevoir au travers de la cloison extérieure (36) le signal sonore après réflexion contre la portion immergeable (50).

8. Réservoir (32) selon l'une des revendications 1 à 7, **caractérisé en ce que** le détecteur (54) de liquide comprend une source générant le signal et disposée à l'extérieur de la cloison extérieure (36), notamment contre la surface externe (38).

9. Réservoir (32) selon l'une des revendications 1 à 8, **caractérisé en ce que** le détecteur (54) de liquide comprend une source de tension électrique (82) apte à appliquer une différence de potentiel électrique entre la cloison extérieure (36) et la portion immergeable (50), le signal étant ladite différence de potentiel électrique.

10. Réservoir (32) selon l'une des revendications 1 à 9, **caractérisé en ce que** le détecteur (54) de liquide est de type capacitif, et configuré pour mesurer la capacité électrique du dégagement (52) en fonction d'une présence de liquide.

11. Réservoir (32) selon l'une des revendications 1 à 10, **caractérisé en ce que** la portion immergeable (50) et la cloison extérieure (36) sont venues de matière.

12. Réservoir (32) selon l'une des revendications 1 à 11, **caractérisé en ce que** le détecteur (54) de liquide, le dégagement (52), et la portion immergeable (50) forment un premier module (44), le système de mesure (42) du niveau comprenant en outre une pluralité de modules (44) similaires ou identiques au premier module (44).

13. Turbomachine (2), notamment un turboréacteur d'aéronef apte à fonctionner avec une accélération verticale négative, comprenant un réservoir (32) de liquide, **caractérisée en ce que** le réservoir (32) de liquide est conforme à l'une des revendications 1 à 12, préférentiellement le liquide est de l'huile.

14. Procédé de mesure de niveau de liquide dans un réservoir, notamment un réservoir (32) d'huile, le procédé comprenant les étapes suivantes :
(a) remplissage (100) du réservoir (32) à l'aide du liquide ;
(b) mesure (102) du niveau de liquide dans le réservoir (32) via un système de mesure (42) du niveau ;
**caractérisé en ce que** le système (42) comprend :
- une portion immergeable (50), préférentiellement réalisée par fabrication additive, en regard de la surface interne (48) de la cloison (36) du réservoir (32);
- un dégagement (52) séparant la portion immergeable (50) de la surface interne (48); et
- un détecteur (54) de liquide ;
et **en ce que** lors de l'étape (b) mesure, le détecteur (54) de liquide génère un signal au travers du dégagement (52), respectivement du liquide en cas de présence dudit liquide dans le dégagement (52), le liquide étant apte à modifier le signal lorsque ledit signal traverse ledit dégagement (52); le réservoir (32) de liquide étant notamment conforme à l'une des revendications 1 à 12.

15. Programme d'ordinateur **caractérisé en ce qu'**il comprend des instructions, qui, lorsque le programme est exécuté par un ordinateur en combinaison avec un réservoir de liquide selon l'une des revendications 1 à 12, conduisent celui-ci à mettre en œuvre les étapes du procédé de mesure de niveau de liquide selon la revendication 14.

## Patentansprüche

1. Behälter (32) für Flüssigkeit, insbesondere für eine Turbomaschine (2), wie z. B. ein Turbotriebwerk eines Flugzeugs, wobei der Behälter (32) eine äußere Trennwand (36) mit einer Innenfläche (48) und einer Außenfläche (38), eine Innenkammer (56), die dazu bestimmt ist, die Flüssigkeit des Behälters (32) zu enthalten, und die durch die Innenfläche (48) der äußeren Trennwand (36) begrenzt ist, und ein Flüssigkeitspegelmesssystem (42) umfasst, **dadurch gekennzeichnet, dass** das Flüssigkeitspegelmesssystem (42) Folgendes umfasst:
- einen tauchbaren Abschnitt (50), der der Innenfläche (48) der äußeren Trennwand (36) entspricht;
- einen Zwischenraum (52), der den tauchbaren Abschnitt (50) von der Innenfläche (48) trennt; und
- einen Flüssigkeitsdetektor (54), der konfiguriert ist, ein Signal an den tauchbaren Abschnitt (50) durch den Zwischenraum (52) auszusenden, wobei das Signal konfiguriert ist, geändert zu werden, wenn Flüssigkeit in dem Zwischenraum (52) vorhanden ist.

2. Behälter (32) nach Anspruch 1, **dadurch gekennzeichnet, dass** der eintauchbare Abschnitt (50) eine Außenfläche (58) umfasst, die der Außentrennwand (36) zugewandt ist und im Allgemeinen der Innenfläche (48) entspricht, wobei die Fläche eine Oberfläche mit Erhebungen (68) umfasst, die sich zur äußeren Trennwand (36) hin erstrecken, und Vertiefungen (70), die mit dem Zwischenraum (52) kommunizieren, und vorzugsweise die Tiefe der Vertiefungen (70) und die Höhe der Erhebungen (68), insbesondere gemessen nach der Dicke des Zwischenraums (52), größer sind als die Breite der Vertiefungen und die Breite der Erhebungen (68).

3. Behälter (32) nach einem der Ansprüche 1 oder 2, **dadurch gekennzeichnet, dass** der Zwischenraum (52) zwei gegenüberliegende Öffnungen (62) umfasst, die mit der Innenkammer (56) in Verbindung stehen.

4. Behälter (32) nach einem der Ansprüche 1 bis 3, **dadurch gekennzeichnet, dass** tauchbare Abschnitt (50) einen Körper (72) mit einem ersten Zweig (74) in Kontakt mit der äußeren Trennwand (36) umfasst, wobei der Körper (72) den tauchbaren Abschnitt (50) bildet.

5. Behälter (32) nach einem der Ansprüche 1 bis 4, **dadurch gekennzeichnet, dass** der tauchbare Abschnitt (50) Noppen (76) umfasst, die in einem Raster angeordnet sind und sich zur Innenfläche (48) der äußeren Trennwand (36) erstrecken.

6. Behälter (32) nach einem der Ansprüche 1 bis 5, **dadurch gekennzeichnet, dass** die Trennwand (36) und der tauchbare Abschnitt (50) metallisch sind und der Zwischenraum (52) einen Luftspalt zwischen dem Abschnitt der Innenfläche (48) bildet.

7. Behälter (32) nach einem der Ansprüche 1 bis 6, **dadurch gekennzeichnet, dass** der Flüssigkeitsdetektor (54) eine Schallquelle (78) und ein Mikrofon (80) umfasst und das Signal vorzugsweise ein Schallsignal ist, das von der Schallquelle (78) durch die äußere Trennwand (36) in Richtung des tauchbaren Abschnitts (50) ausgesendet wird, und das Mikrofon (80) in der Lage ist, durch die äußere Trennwand (36) das Schallsignal nach der Reflexion an dem tauchbaren Abschnitt (50) wahrzunehmen.

8. Behälter (32) nach einem der Ansprüche 1 bis 7, **dadurch gekennzeichnet, dass** der Flüssigkeitsdetektor (54) eine das Signal erzeugende Quelle umfasst und außerhalb der äußeren Trennwand (36), insbesondere an der äußeren Oberfläche (38) angeordnet ist.

9. Behälter (32) nach einem der Ansprüche 1 bis 8, **dadurch gekennzeichnet, dass** der Flüssigkeitsdetektor (54) eine elektrische Spannungsquelle (82) umfasst, die geeignet ist, eine elektrische Potenzialdifferenz zwischen der äußeren Trennwand (36) und dem eintauchbaren Abschnitt (50) zu applizieren, wobei das Signal die elektrische Potenzialdifferenz ist.

10. Behälter (32) nach einem der Ansprüche 1 bis 9, **dadurch gekennzeichnet, dass** der Flüssigkeitsdetektor (54) vom kapazitiven Typ ist und konfiguriert ist, die elektrische Kapazität des Zwischenraums (52) entsprechend des Vorhandenseins von Flüssigkeit zu messen.

11. Behälter (32) nach einem der Ansprüche 1 bis 10, **dadurch gekennzeichnet, dass** der tauchbare Abschnitt (50) und die äußere Trennwand (36) einstückig sind.

12. Behälter (32) nach einem der Ansprüche 1 bis 11, **dadurch gekennzeichnet, dass** der Flüssigkeitsdetektor (54), der Zwischenraum (52) und der tauchbare Abschnitt (50) ein erstes Modul (44) bilden, wobei das Füllstandmesssystem (42) darüber hinaus eine Vielzahl von dem ersten Modul (44) ähnlichen oder identischen Modulen (44) umfasst.

13. Turbomaschine (2), insbesondere ein mit negativer Vertikalbeschleunigung betreibbares Flugzeugstrahltriebwerk, einen Flüssigkeitsbehälter (32) umfassend, **dadurch gekennzeichnet, dass** der Flüssigkeitsbehälter (32) einem der Ansprüche 1 bis 12 entspricht, wobei die Flüssigkeit vorzugsweise Öl ist.

14. Verfahren zum Messen des Flüssigkeitsfüllstands in einem Behälter, insbesondere einem Ölbehälter (32), wobei das Verfahren die folgenden Schritte umfasst:
(a) Auffüllen (100) des Behälters (32) mittels der Flüssigkeit;
(b) Messen (102) des Flüssigkeitsfüllstands im Behälter (32) über ein Füllstandmesssystem (42),
**dadurch gekennzeichnet, dass** das System (42) Folgendes umfasst:
- einen vorzugsweise durch additive Fertigung hergestellten tauchbaren Abschnitt (50), der der Innenfläche (48) der Trennwand (36) des Behälters (32) zugewandt ist;
- einen Zwischenraum (52), der den tauchbaren Abschnitt (50) von der Innenfläche (48) trennt, und
- einen Flüssigkeitsdetektor (54);
und dadurch, dass während des Schritts (b) der Messung der Flüssigkeitsdetektor (54) ein Signal durch den Zwischenraum (52) bzw. der Flüssigkeit erzeugt, falls die Flüssigkeit im Zwischenraum (52) vorhanden ist, wobei die Flüssigkeit geeignet ist das Signal zu modifizieren, wenn das Signal den Zwischenraum (52) passiert, wobei der Flüssigkeitsbehälter (32) insbesondere einem der Ansprüche 1 bis 12 entspricht.

15. Computerprogramm, **dadurch gekennzeichnet, dass** es Anweisungen umfasst, die, wenn das Programm von einem Computer in Kombination mit einem Flüssigkeitsbehälter nach einem der Ansprüche 1 bis 12 ausgeführt wird, diesen dazu veranlassen, die Schritte des Flüssigkeitsfüllstandmessverfahrens nach Anspruch 14 auszuführen.

## Claims

1. Tank (32) for liquid, in particular of a turbomachine (2) such as an aircraft turbojet engine, the tank (32) comprising an external wall (36) with an internal surface (48) and an external surface (38); an inner chamber (56) for containing the liquid from the tank (32) and delimited by the inner surface (48) of the outer wall (36); a liquid level measurement system (42); **characterized in that** the measurement system (42) comprises:
- a submersible portion (50) along the internal surface (48) of the external wall (36);
- a clearance (52) separating the submersible portion (50) from the internal surface (48); and
- a detector (54) of liquid configured to emit a signal towards the submersible portion (50) through the clearance (52), said signal being configured to be modified in the event of the presence of liquid in the clearance (52).

2. Tank (32) according to claim 1, **characterized in that** the submersible portion (50) comprises an external side (58) facing the external wall (36) and generally matching the internal surface (48), said side comprising a surface with bumps (68) protruding towards the external wall (36) and recesses (70) communicating with the clearance (52), and preferably, the depth of the recesses (70) and the height of the bumps (68); in particular measured according to the thickness of the clearance (52); are greater than the width of the clearances and than the width of the bumps (68).

3. Tank (32) according to one of claims 1 and 2, **characterized in that** the clearance (52) comprises two opposite openings (62) communicating with the inner chamber (56).

4. Tank (32) according to one of claims 1 to 3, **characterized in that** the submersible portion (50) comprises a body (72) with a first branch (74) in contact with the external wall (36), said body (72) forming the submersible portion (50).

5. Tank (32) according to one of claims 1 to 4, **characterized in that** the submersible portion (50) comprises studs (76) arranged in a grid pattern and extending towards the internal surface (48) of the wall exterior (36).

6. Tank (32) according to one of claims 1 to 5, **characterized in that** the wall (36) and the submersible portion (50) are metallic, and the clearance (52) forms an air-gap between the portion of the surface internal (48).

7. Tank (32) according to one of claims 1 to 6, **characterized in that** the detector (54) of liquid comprises an acoustic source (78) and a microphone (80) and preferably the signal is a sound signal emitted by the acoustic source (78) through the external wall (36) towards the submersible portion (50), and the microphone (80) is able to perceive through the external wall (36) the sound signal after reflection against the portion submersible (50).

8. Tank (32) according to one of claims 1 to 7, **characterized in that** the detector (54) of liquid comprises a source generating the signal and disposed outside the external wall (36), in particular against the external surface (38).

9. Tank (32) according to one of claims 1 to 8, **characterized in that** the detector (54) of liquid comprises an electric voltage source (82) capable of applying a difference in electric potential between the external wall (36) and the submersible portion (50), the signal being said difference in electrical potential.

10. Tank (32) according to one of claims 1 to 9, **characterized in that** the detector (54) of liquid is of the capacitive type, and configured to measure the electrical capacity of the clearance (52) according to a presence of liquid.

11. Tank (32) according to one of claims 1 to 10, **characterized in that** the submersible portion (50) and the outer wall (36) are integrally made.

12. Tank (32) according to one of claims 1 to 11, **characterized in that** the detector (54) of liquid, the clearance (52), and the submersible portion (50) form a first module (44), the level measurement system (42) further comprising a plurality of modules (44) similar or identical to the first module (44).

13. Turbomachine (2), in particular an aircraft turbojet engine capable of operating with negative vertical acceleration, comprising a tank (32) of liquid, **characterized in that** the tank (32) of liquid is in accordance to one of the claims 1 to 12, preferably the liquid is oil.

14. Method for measuring the level of liquid in a tank, in particular an oil tank (32), the method comprising the following steps:
(a) filling (100) of the tank (32) with the liquid;
(b) measuring (102) the level of liquid in the tank (32) via a level measuring system (42);
**characterized in that** the system (42) comprises:
- a submersible portion (50), preferably produced by additive manufacturing, facing the internal surface (48) of the wall (36) of the tank (32);
- a clearance (52) separating the submersible portion (50) from the internal surface (48); and
- a detector (54) of liquid;
and **in that** during the measurement step (b), the detector (54) of liquid generates a signal through the clearance (52), respectively of the liquid in the presence of said liquid in the clearance (52), the liquid being adapted to modify the signal when said signal crosses said clearance (52); the tank (32) being in particular in accordance to one of claims 1 to 12.

15. Computer program **characterized in that** it includes instructions, which, when the program is executed by a computer in combination with a tank of liquid according to one of claims 1 to 12, lead the latter to implement the steps of the liquid level measurement method according to claim 14.
